Europäisches Patentamt

(19) European Patent Office

Office européen des brevets

(11) Numéro de publication: **0 097 589**
A1

(12) # DEMANDE DE BREVET EUROPEEN

(21) Numéro de dépôt: 83401251.0

(22) Date de dépôt: 17.06.83

(51) Int. Cl.³: **B 01 D 1/00**
B 01 D 1/06, B 01 D 1/28
F 28 B 9/10

(30) Priorité: 18.06.82 FR 8210718

(43) Date de publication de la demande:
04.01.84 Bulletin 84/1

(84) Etats contractants désignés:
AT BE CH DE GB IT LI LU NL SE

(71) Demandeur: LAGUILHARRE S.A.
2, avenue du 18 Juin 1940
F-92500 Rueil Malmaison(FR)

(72) Inventeur: Ciboit, Jacques Jean
164 bis rue de l'Université
F-75007 Paris(FR)

(74) Mandataire: Kedinger, Jean-Paul et al,
CABINET MALEMONT 13 rue du Général de Castelnau
F-67000 Strasbourg(FR)

(54) Procédé d'évacuation des incondensables présents dans le corps de chauffe d'un évaporateur et évaporateur adapté pour la mise en oeuvre de ce procédé.

(57) Procédé d'évacuation des incondensables présents dans le corps de chauffe alimenté en vapeur de chauffage, d'un évaporteur et évaporateur adapté à la mise en oeuvre de ce procédé. L'évaporateur comporte au moins un corps de chauffe (1) pourvu d'une arrivée (13) de vapeur de chauffage et d'au moins un moyen de liaison (14, 14') faisant communiquer ledit corps de chauffe (1), soit avec un moyen d'extraction quand il est destiné à être sous pression réduite ou à pression atmosphérique, soit avec l'atmosphère quand il est destiné à être en surpression. Il se caractérise en ce que ledit moyen de liaison (14, 14') comporte un moyen de réglage (15, 15') du débit de gaz destiné à circuler dans ledit moyen de liaison (14, 14').

FIG. 1

Procédé d'évacuation des incondensables présents dans le corps de chauffe d'un évaporateur et évaporateur adapté pour la mise en oeuvre de ce procédé

La présente invention concerne un procédé d'évacuation des incondensables présents dans le corps de chauffe alimenté en vapeur de chauffage, d'un évaporateur, qui consiste à relier le corps de chauffe à la zone vers laquelle les incondensables sont destinés à être évacués, et à créer une différence de pression entre cette dernière et le corps de chauffe, la pression la plus élevée régnant dans ce dernier. Elle concerne par ailleurs un évaporateur adapté pour la mise en oeuvre de ce procédé.

La présence d'incondensables (provenant notamment de l'air se trouvant dans la vapeur de chauffage ou de l'air entrant par les fuites) dans le corps de chauffe d'un évaporateur affectant de manière sensible le transfert de calories dudit corps de chauffe vers le produit à évaporer, il est nécessaire d'extraire ces incondensables du corps de chauffe. Ce problème de la présence des incondensables dans le corps de chauffe est particulièrement critique au démarrage de l'évaporateur puisque c'est durant cette période que la quantité d'incondensables est la plus importante dans le corps de chauffe.

Dans la plupart des procédés connus à ce jour et qui sont du type rappelé en préambule, l'évacuation des incondensables est assurée par les mêmes moyens, aussi bien en période de démarrage de l'évaporateur qu'en période de fonctionnement normal de l'évaporateur ; on comprendra aisément que les évaporateurs dans lesquels sont mis en oeuvre ces procédés, nécessitent une période de démarrage souvent très longue et partant préjudiciable au rendement desdits évaporateurs. En outre, si le corps de chauffe est destiné à fonctionner sous pression réduite, la montée en vide sera désavantageusement longue avec ce type de procédé.

Le but de la présente invention est par conséquent de pallier à ces inconvénients et, pour ce faire, elle propose un procédé du type rappelé en préambule qui se caractérise en ce qu'il consiste en outre à faire varier le débit de gaz s'écoulant du corps de chauffe vers ladite zone, en fonction du volume d'incondensables à évacuer, ce débit étant élevé quand le volume d'incondensables à évacuer est important et réduit quand ce volume est faible.

Par mise en oeuvre du procédé selon l'invention, il sera ainsi possible de réaliser, très rapidement, l'évacuation des incondensables au cours de la période de démarrage, cette période étant de ce fait très courte avec tous les avantages économiques que cela comporte. En outre, cette évacuation rapide permettra une montée en vide rapide si le corps de chauffe doit opérer sous pression réduite.

Par ailleurs, la période de démarrage une fois terminée, c'est-à-dire une fois que la teneur en incondensables a atteint un seuil pour lequel l'évaporateur trouve sa pleine efficacité, on pourra, grâce à l'invention, en réduisant le débit de gaz s'écoulant hors du corps de chauffe, poursuivre l'extraction des incondensables se formant désormais dans le corps de chauffe avec une faible vitesse, sans risquer d'extraire simultanément une trop grande quantité de vapeur de chauffage et, partant, sans risquer de nuire à l'efficacité de l'évaporateur.

La variation de débit pourra avantageusement être obtenue en faisant varier la section de passage du gaz dans la liaison assurant la communication entre le corps de chauffe et ladite zone, ce qui peut être réalisé de manière rapide et simple ; plus précisément, la section de passage du gaz sera maximum au démarrage de l'évaporateur et minimum pendant le régime de fonctionnement normal de cet évaporateur.

Il est à noter en outre, que le procédé selon l'invention est applicable à tout type d'évaporateur chauffé à la vapeur et notamment aux évaporateurs à recompression de vapeur, qu'ils soient du type à thermocompression de vapeur ou du type à recompression mécanique de vapeur.

La présente invention concerne également un évaporateur adapté à la mise en oeuvre du procédé qui vient d'être décrit et comportant au moins un corps de chauffe pourvu d'une arrivée de vapeur de chauffage et d'au moins un moyen de liaison faisant communiquer ledit corps de chauffe, soit avec un moyen d'extraction quand il est destiné à être sous pression réduite ou à pression atmosphérique, soit avec l'atmosphère quand il est destiné à être en surpression, cet évaporateur se caractérisant en ce que ledit moyen de liaison comporte un moyen de réglage du débit de gaz destiné à circuler dans ledit moyen de liaison.

Selon un premier mode de réalisation, les moyens de liaison et les moyens de réglage sont constitués par un conduit dans lequel est disposée (a) une vanne, (b) une vanne à deux positions d'ouverture, l'une des positions correspondant à un faible débit de passage de gaz et l'autre position correspondant à un grand débit de passage de gaz ou (c) une vanne à papillon pourvue d'au moins un perçage et à deux positions, une position ouverte et une position fermée. Au démarrage de l'installation, la vanne (a) ou (b) sera positionnée de manière à assurer un grand débit de passage de gaz ou la vanne à papillon (c) sera en position ouverte ; dès que la quantité d'incondensables présents dans le corps de chauffe permet un transfert de calories satisfaisant vers le produit à évaporer, la vanne (a) ou (b) est mise dans la position correspondant à un faible débit de passage de gaz ou la vanne à papillon (c) est mise en position fermée et dans ce dernier cas le gaz s'écoulera alors hors du corps de chauffe uniquement par les perçages prévus sur cette vanne (c), c'est-à-dire avec un faible débit.

Selon un second mode de réalisation de l'invention, les moyens de liaison et les moyens de réglage sont constitués par un premier conduit reliant le corps de chauffe au moyen d'extraction ou à l'atmosphère, ce premier conduit portant en dérivation un second conduit de plus grand diamètre, qui se referme sur le premier conduit et qui porte une vanne.

Au démarrage de l'évaporateur, la vanne sera en position ouverte, le gaz s'écoulant hors du corps de chauffe simultanément par les deux conduits et dès que la teneur en incondensables dans le corps de chauffe a atteint une valeur suffisamment faible, on ferme la vanne et le gaz ne s'écoule plus que par le premier conduit.

Il est à noter que le premier conduit peut être pourvu d'un diaphragme qui règlera le débit dans ce conduit à la valeur désirée.

On remarquera encore que l'évaporateur selon l'invention pourra être du type quelconque et notamment à recompression de vapeur.

Deux modes d'exécution de la présente invention sont représentés à titre d'exemples sur le dessin annexé dans lequel :

- la figure 1 est une représentation schématique d'un évaporateur conforme au premier mode de réalisation défini ci-dessus,

- la figure 2 est une vue en plan agrandie de la vanne à papillon mise en oeuvre dans l'évaporateur de la figure 1, et

- la figure 3 est une représentation schématique d'un évaporateur conforme au deuxième mode de réalisation défini ci-dessus.

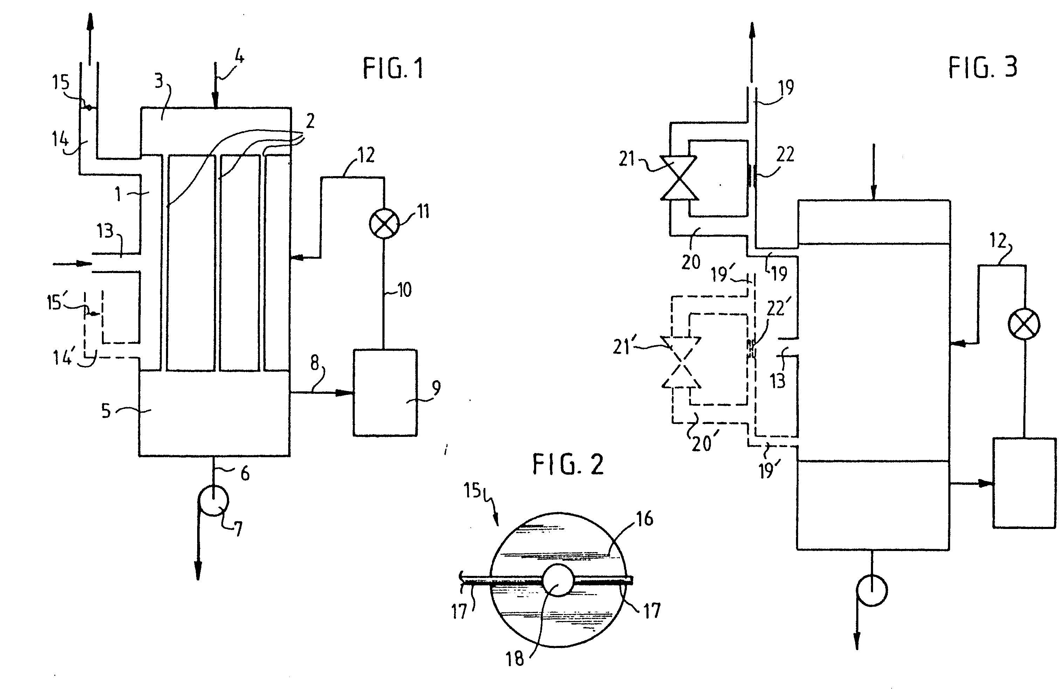

L'évaporateur représenté à la figure 1 est un évaporateur à flot tombant et à recompression mécanique de vapeur qui comprend de manière connue en soi, un corps de chauffe 1 traversé par une série de tubes verticaux 2 reliant une chambre supérieure 3 située au-dessus et à l'aplomb du corps de chauffe 1 et pourvue d'une arrivée 4 de produit à évaporer, à une chambre inférieure 5 située au-dessous dudit corps de chauffe et solidaire de ce dernier, la base de cette chambre communiquant avec le conduit d'aspiration 6 d'une pompe d'extraction 7 et le côté latéral de cette même chambre inférieure 5 communiquant par un conduit 8 avec un séparateur liquide-vapeur 9. Par ailleurs, le conduit d'aspiration 10 d'un compresseur mécanique de vapeur 11 débouche dans la partie haute du séparateur liquide-vapeur 9, le conduit de refoulement 12 de ce même compresseur mécanique 11 débouchant dans le corps de chauffe 1. Ce dernier est pour sa part pourvu d'une éventuelle arrivée 13 de vapeur de chauffage ou d'appoint en vapeur de chauffage. Un conduit 14 dans lequel est disposée, conformément à l'invention, une vanne à papillon 15, débouche en outre dans la partie haute de ce corps ce chauffe 1.

L'extrémité libre du conduit 14 est quant à elle en relation, soit avec l'atmosphère si le corps de chauffe est destiné à fonctionner en surpression, soit avec un moyen d'extraction non représenté (par exemple une pompe d'extraction) si le corps de chauffe est destiné à fonctionner sous la pression atmosphérique ou sous vide.

La vanne à papillon décrite de manière plus détaillée à la figure 2 est constituée de manière connue en soi par exemple par un disque obturateur 16 et d'un axe porteur diamétral 17 manoeuvré par tout système connu approprié (non représenté).

4

Conformément à l'invention, le disque obturateur 16 est pourvu d'un ou plusieurs perçages ; dans le cas de la figure 2, le disque obturateur 16 est pourvu d'un perçage central 18.

Au démarrage du processus d'évaporation, la vanne à papillon 15 étant en position ouverte, on met en service le moyen d'extraction en relation avec le conduit 14, moyen d'extraction qui n'est présent que dans le cas où le corps de chauffe 1 doit fonctionner sous vide et on admet de la vapeur d'eau par l'arrivée 13 dans le corps de chauffe 1. Dans ces conditions, les incondensables présents dans le corps de chauffe sont évacués hors du corps de chauffe 1 par le conduit 14. On choisira bien entendu la section de ce conduit 14 de manière à ce que la teneur en incondensables dans le corps de chauffe 1 atteigne le plus rapidement possible le seuil permettant une évaporation suffisamment efficace ou de manière à ce que l'on atteigne le plus rapidement possible, dans le corps de chauffe 1, un vide voisin de celui qui doit y régner en fonctionnement normal. L'évacuation des incondensables est réalisée dans ces conditions jusqu'à ce que ce seuil ou ce vide soit atteint. Quand ce seuil ou ce vide est atteint, on admet le produit à concentrer par l'arrivée 4, on met en service la pompe 7 et le compresseur 11, on limite l'admission de vapeur par l'arrivée 13 de manière à ce que cette admission corresponde juste à l'appoint en vapeur éventuellement nécessaire, et on amène (manuellement ou automatiquement) la vanne papillon en position fermée. A partie de ce moment, l'écoulement de gaz hors du corps de chauffe se fera avec un débit très réduit et fonction du diamètre du perçage 18. Ce diamètre sera donc choisi de manière à permettre un débit d'écoulement de gaz dans le conduit 14 suffisant pour assurer une évacuation satisfaisante des incondensables sans pour autant perdre exagérément de la vapeur de chauffage.

L'évaporateur représenté à la figure 3 est en tous points identique à celui représenté à la figure 1, si ce n'est que le conduit 14 et la vanne à papillon 15 ont été remplacés par un dispositif constitué par un premier conduit 19 dont l'une des extrémités débouche dans le corps de chauffe 1, l'autre extrémité étant en relation soit avec l'atmosphère quand le corps de chauffe 1 doit fonctionner en surpression, soit avec une pompe d'extraction (non représentée) quand le corps de chauffe 1 doit fonctionner à la pression atmosphérique ou sous vide ; ce conduit 19 porte en dérivation un second conduit 20 qui se referme sur le conduit 19 et sur lequel est disposée une vanne 21. En outre, la section du premier conduit 19 est inférieure à celle du second conduit 20.

Le fonctionnement de cet évaporateur est identique à celui de la figure 1, excepté (a) en ce qu'au démarrage la vanne 21 est ouverte, l'écoulement de gaz hors du corps de chauffe 1 se faisant à la fois par le conduit 19 et le conduit 20 et (b) en ce que lorsque la teneur en incondensables dans le corps de chauffe 1 atteint le seuil permettant une évaporation satisfaisante, on ferme la vanne 21, l'écoulement de gaz se faisant alors uniquement par le conduit 19. Bien entendu, la section du conduit 20 sera choisie de manière à ce que pendant la période de démarrage, on atteigne le plus rapidement possible le seuil recherché et la section du conduit 19 sera choisie de manière à y permettre un débit d'écoulement de gaz suffisant pour assurer une évacuation satisfaisante des incondensables sans qu'il y ait entraînement de vapeur de chauffage.

Avantageusement, le premier conduit 19 sera muni d'un diaphragme 22 disposé entre les deux points au niveau desquels le second conduit 20 se referme sur le conduit 19. Ce diaphragme 22 permettra de moduler de manière simple la section de passage du gaz dans ce conduit 19 en fonction de la quantité d'incondensables à extraire en fonctionnement normal de l'évaporateur, c'est-à-dire après la période de démarrage.

Les évaporateurs qui viennent d'être décrits sont à simple effet et à recompression mécanique de vapeur, mais l'invention s'étend bien évidemment aux évaporateurs simple effet ou multiple effet, qu'ils soient alimentés en vapeur de chauffage provenant d'une chaudière ou qu'ils soient du type à recompression mécanique de vapeur ou à thermocompression de vapeur.

Par ailleurs, les évaporateurs objet des figures 1 et 3 peuvent comporter plusieurs conduits 14 (ou 19 et 20), chacun de ces conduits 14 (ou 19 et 20) étant pourvu d'une vanne 15 (ou 21) et relié à l'atmosphère ou à un moyen d'extraction quand le corps de chauffe 1 est destiné à fonctionner sous vide. Ces conduits 14 (ou 19 et 20) pourront par exemple être au nombre de deux, l'un débouchant de préférence dans la partie haute du corps de chauffe 1, l'autre 14' (ou 19' et 20') représenté en pointillés et pourvu d'une vanne à papillon 15' (ou d'une vanne 21') débouchant de préférence à la partie basse de ce dernier, l'arrivée 13 et le conduit de refoulement 12 débouchant pour leur part dans le corps de chauffe 1 de préférence à un niveau situé à mi-distance entre ces deux conduits 14 (ou 19 et 20) et 14' (ou 19' et 20').

Enfin, les évaporateurs entrant dans le cadre de la figure 1, au lieu d'être pourvus d'une vanne à papillon 15, peuvent également, conformément à l'invention, être pourvus d'une simple vanne ou encore d'une vanne à deux ouvertures, l'une des ouvertures correspondant à un grand débit de passage de gaz et l'autre ouverture correspondant à un faible débit de passage de gaz.

## REVENDICATIONS

1. Procédé d'évacuation des incondensables présents dans le corps de chauffe alimenté en vapeur de chauffage, d'un évaporateur, qui consiste à relier le corps de chauffe à la zone vers laquelle les incondensables sont destinés à être évacués, et à créer une différence de pression entre cette dernière et le corps de chauffe, la pression la plus élevée régnant dans ce dernier, caractérisé en ce qu'il consiste en outre à faire varier le débit de gaz s'écoulant du corps de chauffe vers ladite zone, en fonction du volume d'incondensables à évacuer, ce débit étant élevé quand le volume d'incondensables à évacuer est important et réduit quand ce volume est faible.

2. Procédé selon la revendication 1, caractérisé en ce que la variation de débit est obtenue en faisant varier la section de passage du gaz dans la liaison assurant la communication entre le corps de chauffe et ladite zone.

3. Procédé selon la revendication 1 ou 2, caractérisé en ce que l'évaporateur est à recompression de vapeur.

4. Evaporateur adapté à la mise en oeuvre du procédé selon la revendication 1, 2 ou 3 et comportant au moins un corps de chauffe (1) pourvu d'une arrivée (13) de vapeur de chauffage et d'au moins un moyen de liaison (14, 14') assurant l'évacuation des incondensables et faisant communiquer ledit corps de chauffe (1) soit avec un moyen d'extraction quand il est destiné à être sous pression réduite ou à pression atmosphérique, soit avec l'atmosphère quand il est destiné à être en surpression, caractérisé en ce que ledit moyen de liaison (14, 14') comporte un moyen pour régler (15, 15') le débit de gaz évacué par ledit moyen de liaison (14, 14'), en fonction de la teneur en incondensables présents dans le corps de chauffe (1).

5. Evaporateur selon la revendication 4, caractérisé en ce que les moyens de liaison et les moyens de réglage sont constitués par un conduit (14,14') dans lequel est disposée une vanne.

6. Evaporateur selon la revendication 5, caractérisé en ce que les moyens de liaison et les moyens de réglage sont constitués par un conduit (14,14') dans lequel est disposée une vanne à deux positions d'ouverture, l'une des positions correspondant à un faible débit de passage de gaz et l'autre position correspondant à un grand débit de passage de gaz.

7. Evaporateur selon la revendication 4, caractérisé en ce que les moyens de liaison et les moyens de réglage sont constitués par un conduit (14,14') dans lequel est disposée une vanne à papillon (15, 15') pourvue d'au moins un perçage (18) et à deux positions, une position ouverte et une position fermée.

8. Evaporateur selon la revendication 4, caractérisé en ce que les moyens de liaison et les moyens de réglage sont constitués par un premier conduit (19, 19') reliant le corps de chauffe (1) au moyen d'extraction ou à l'atmosphère, ce premier conduit (19, 19') portant en dérivation un second conduit (20, 20') de plus grand diamètre, qui se referme sur le premier conduit (19, 19') et qui porte une vanne (21, 21').

9. Evaporateur selon la revendication 8, caractérisé en ce que le premier conduit (19, 19') est pourvu d'un diaphragme (22, 22').

10. Evaporateur selon l'une quelconque des revendications 4 à 9, caractérisé en ce qu'il est du type à recompression de vapeur.

FIG. 1

FIG. 2

FIG. 3

1/1

0097589

Office européen
des brevets

RAPPORT DE RECHERCHE EUROPEENNE

0097589
Numéro de la demande

EP 83 40 1251

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-2 859 809 (H.O. EHRISMAN) <br><br> * Colonne 2, lignes 20-28; colonne 3, ligne 51 - colonne 4, ligne 72; figures * | 1-6,8-10 | B 01 D 1/00 <br> B 01 D 1/06 <br> B 01 D 1/28 <br> F 28 B 9/10 |
| Y | CH-A- 447 237 (SIEMENS A.G.) <br> * Colonne 1, ligne 18 - colonne 3, ligne 52; figure * | 1,4 | |
| A | US-A-2 760 919 (A. LATHEM JR.) <br><br> * Colonne 4, ligne 32 - colonne 5, ligne 19; figures * | 1,3,4 10 | |
| A | GB-A- 661 863 (GENERAL AMERICAN TRANSP.) <br> * Page 1, lignes 16-58; page 2, lignes 56-75; page 3, lignes 4-38; figures * | 4,5 | |
| A | US-A-4 030 985 (D. BARBA et al.) <br> * Colonne 4, lignes 25-54; figure 3 * | | |
| A | CH-A- 93 677 (A.G. KUMMLER & MATTER) | | |
| A | DE-A-2 215 369 (KRAFTWERK UNION) | | |

DOMAINES TECHNIQUES RECHERCHES (Int. Cl. ³)

B 01 D
C 02 F
F 22 D
F 28 B

Le présent rapport de recherche a été établi pour toutes les revendications

| Lieu de la recherche <br> LA HAYE | Date d'achèvement de la recherche <br> 27-09-1983 | Examinateur <br> VAN BELLEGHEM W.R. |
|---|---|---|